# EUROPEAN PATENT SPECIFICATION

(11) **EP 2 751 524 B1**
(45) Date of publication and mention of the grant of the patent: **28.09.2016**
(21) Application number: 12751518.7
(22) Date of filing: 30.08.2012
(51) Int. Cl.: H02J 3/00, G01D 4/00, H02J 13/00, H04L 9/32, G06Q 30/02, H04L 29/06

(54) **PRICING SYSTEM AND METHOD FOR UTILITY CONSUMPTIONS WITHIN A SMART GRID**
PREISSYSTEM UND VERFAHREN FÜR DIENSTPROGRAMMVERBRÄUCHE INNERHALB EINES SMARTEN GITTERS
SYSTÈME DE TARIFICATION ET PROCÉDÉ POUR LES CONSOMMATIONS D'ÉNERGIE DANS UN PETIT RÉSEAU

(30) Priority: 30.08.2011 EP 11179338; 30.08.2011 US 201161528826 P
(43) Date of publication of application: 09.07.2014
(73) Proprietor: Nagravision S.A., 1033 Cheseaux-sur-Lausanne (CH)
(72) Inventor: LE BUHAN, Corinne, CH-1619 Les Paccots (CH)
(74) Representative: Leman Consulting S.A.
(86) International application number: PCT/EP2012/066809
(87) International publication number: WO 2013/030250

(56) References cited:
- WO-A1-01/06432
- WO-A1-2004/034069
- CA-A1- 2 744 319
- US-A1- 2005 065 743
- US-A1- 2006 206 433

## Description

### TECHNICAL FIELD

This invention concerns the field of utility meters that are monitored and managed from a plurality of utility managements centers through a plurality of intermediate data concentrators in a communication network.

### BACKGROUND

The on-going deregulation in worldwide energy distribution markets is driving the need for smart utility distribution grids and smart meters, enabling both utility providers and consumers to monitor the detailed consumption of an end user at any time through open communication networks. The energy market is particularly concerned as of today but related issues are also relevant to other utility markets such as water or gas.

While a number of legacy meters already implement some point-to-point Automated Metering Reading (AMR) protocols using for instance standard optical or modem interfaces, they are not able to interact with either the end user home area network devices or the remote utility monitoring facilities using wireless or power line communication networks. The industry answer to this regulatory requirement in the next decade will therefore consist in swapping the legacy meters for so-called smart meters.

Smart meters enable utility providers to monitor the detailed consumption of an end user at any time through open communication networks. The consumption measurement sampling granularity can then be much finer than in legacy systems where the meters were manually controlled about once a year. It is also possible to support multiple tariffs from different providers and adapt them much more frequently in accordance with the finer measurement periods.

From the utility provider perspective, as there will be no more local measurement and physical control of the meter functionality by authorized personnel, the smart metering architecture needs careful design to ensure secure, tamper resistant and trusted data collection and transmission from the smart meters to the provider utility services facility. Various solutions can be defined based on state of the art cryptography protocols and a key management system under the control of the utility provider. Those solutions typically require the smart meter to generate its measurement reporting messages specifically for a given utility provider. In a deregulated market where the smart meter is able to negotiate its tariffs with multiple providers, this results in increased bandwidth and processing needs as well as tamper resistant design complexity, manufacturing costs and maintenance costs for the utility meters.

The document WO 01/06432 discloses a computer aided analysis for finding the optimal buying alternative provided by one or more energy suppliers in order to automatically acquire the optimal energy supplies possible in real-time. To this end, this document suggests an analysis module, that has to be installed at the end user side, in order to track in real-time multiple fuel pricing models allowing for immediate switching of alternate energy sources based on price and time-of-use energy patterns. The rate analysis module allows users to make comparisons between multiple rates and determine which rate plan provided by which energy seller is best suited to their needs.

The document US2004/0225625 discloses a rate engine that receives inputs such as utility data and rate data and generate a cost data on a per logging interval basis. Data, such as usage/consumption measurements, collected by the measuring device (utility meter) is transported over the network to the rate engine. Additionally, one or more utility management entities (such as electric, water or gas suppliers) that manage the provisioning of utility are coupled with the utility and may publish rate data via a rate data server through the network. The rate engine receives various inputs including, utility data, rate data, time data and optional meta data (e.g. billing period id, cost center id, geographic location, etc...). The output may be one or more time intervals, with a cost associated with each time interval.

However, while keeping in mind that reporting data refers simultaneously to millions of utility meters, none of these documents suggests means for optimizing as far as possible the management of exchanged data in order to save bandwidth and computing resources. Besides, these documents merely suggest exchanging communications through known network without taking care from hacking and tampering caused by certain malicious persons.

There is therefore a need for a more flexible smart metering network topology to optimize the smart metering operations, communications, and security.

### SUMMARY OF THE INVENTION

The invention is as defined in the claims.

The present invention suggests a secured metering reporting communication method for pricing of utility consumptions metered by utility meters within a communication network comprising a plurality of data concentrators proxy located as intermediate devices between utility meters and a plurality of utility providers. More particularly and in accordance with the preferred embodiment, the present invention refers to a pricing method for utility consumptions within a smart grid comprising a plurality of utility meters each associated and connected to a plurality of utility management centers through a intermediate data concentrators identified by a data concentrator identifier DCid, each utility meter being identified by a utility meter identifier Uid and being adapted to produce and send, thanks to securing means, secured utility meter messages DTupᵤ,_{c} to the data concentrator, each of the data concentrators being adapted to produce and to send secured reports to management centers which are each identified by a management center identifier Pid, this method comprising the steps of:
- receiving, by the data concentrator, a secured data concentrator message comprising at least a tariff table from each of said utility management centers; such a tariff table comprising at least one time interval [DT1, DT2] per a period of twenty-four hours and a rate associated to this time interval,
- decrypting and/or verifying the authenticity and the integrity of said data concentrator message; in case of failure or unsuccessful result: interrupting the processing of said data concentrator message,
- selecting, by the data concentrator, the lowest rate for each time interval [DT1, DT2] among the rates of all time intervals from all these tariff tables, in order to derive an advantageous tariff table,
- receiving, by the data concentrator, the utility meter messages DTup_{u,c} from the utility meter, each of these utility meter messages DTupᵤ,_{c} comprising: a metering data measurement DTup reported by the utility meter which sent this message DTupᵤ,_{c}, its utility meter identifier Uid, the data concentrator identifier DCid and the management center identifier Pid,
- decrypting and/or verifying the authenticity and the integrity of said utility meter messages, in case of failure or unsuccessful result: interrupting the processing of said utility meter message,
- determining, on the basis of several metering data measurements DTup, a metering counter differential consumption value ΔCPT calculated by difference of two metering counter consumption indexes CPT measured by the utility meter within a time period interval ΔT defined by a first time T1 and by a second time T2,
- assigning to this metering counter differential consumption value ΔCPT the utility management center suggesting the lowest rate for the time period interval ΔT comprised between said first time T1 and said second time T2,
- establishing, for each management center, a report containing at least the metering counter differential consumption value ΔCPT assigned to this management center together with the utility meter identifier Uid to which this value ΔCPT refers,
- securing said report before sending it from the data concentrator towards the aforementioned utility management center which will process said report only after having decrypted it and/or checked its authenticity and its integrity.

The present invention also refers to a system for implementing the above mentioned method.

### BRIEF DESCRIPTION OF THE DRAWINGS

The present invention will be better understood thanks to the attached figures in which:
Figure 1 shows a schematic illustration of a star-shaped network comprising end user utility meters, data concentrators and utility provider management centers.
Figure 2 shows two tariff tables provided by two different utility providers and a derived advantageous tariff table computed by the data concentrator on the basis of said two tariff tables.

### DETAILED DESCRIPTION

The proposed solution comprises a data concentrator which is connected both to the smart meter and to a number of utility providers.

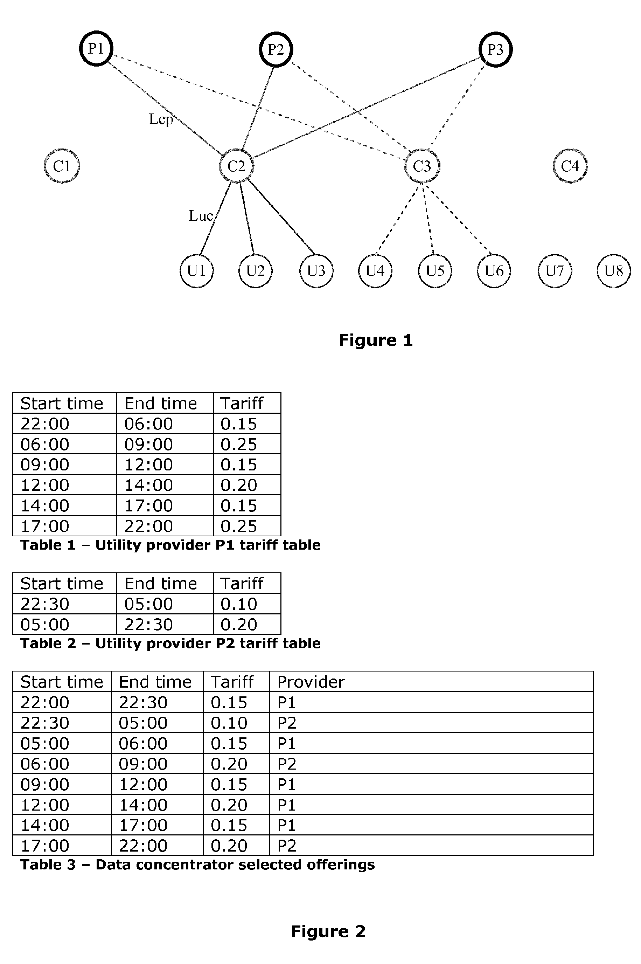

Figure 1 illustrates one possible smart grid network topology, based on a star-shaped network of subset of end user utility meters U1, U2, U3, which are connected to an intermediate data concentrator C2. This data concentrator being at its turn connected to a plurality of utility provider management center. The concentrator is typically co-located with the low-voltage utility distribution to a neighborhood and monitors up to several thousands of utility meters. In a deregulated utility market, the data concentrator C2 can be further connected to multiple utility providers P1, P2, P3 who are offering competing utility delivery offerings to the end user (Figure 1).

Each utility management center P1, P2, P3 implements various utility management processes such as data management billing, load management and outage control, and queries and controls the data concentrators C1, C2, C3, C4 accordingly through the smart grid global communication network links Lpc.

Each data concentrator C1, C2, C3, C4 comprises functional components in charge with enforcing meter usage monitoring and reporting to the utility management center by means of secure communications with the individual meters through the local communication network links Luc on the one hand and with the utility providers management centers through the global smart grid network links Lcp on the other hand.

Each communication network link Lcp, Luc from Figure 1 is built over a utility metering communication physical network, such as, but not limited to, a cable network, the power line wire, a wireless network, or a combination thereof, and employs a communication networking protocol, such as, but not limited to, Internet Protocol (IP) v4 or v6. On top of those networks, communication messaging for smart grids and smart meters is largely inspired by the telecommunication industry and subject to emerging standardization by international committees such as ANSI or IEC.

In a deregulated market, each end user can choose its preferred utility provider. For instance utility provider P2 is selected for utility meters U1 and U3 while utility provider P1 is chosen for utility meter U2. As utility offerings evolve towards a finer granularity and more frequent renewal of the tariffs, the utility meters have to process them accordingly and report their utility consumption at a higher rate than before, for instance every 15 minutes. This overloads both the limited meter processing power and the communication network between the utility providers and the utility meters.

This problem is avoided by a distributed computing system in which the data concentrator C establishes secure communications with each utility provider, receives the tariffs table and relevant information such as the amount of available utility that can be delivered to the individual meters from each utility provider, and selects the best offering based on this information. Advantageously, by obtaining information relating to the amount of available utility that can be delivered by each provider, the data concentrators can efficiently manage, at an early stage, the demands of end users in relation to the feeding possibilities of each provider. The utility provider may be a commercial provider, a state-controlled provider or even an end-user installation producing some utility amount that is re-injected into the utility delivery network.

The data concentrator C further establishes secure communications with each utility meter U, receives the regular utility consumption reports DTup_{u,c} from each utility meter U, and separately computes a consolidated report RTup_{u,p} intended for each utility provider P in line with the former offering selection. The advantage of this solution is that the utility meter only needs to establish, encrypt and sign one DTup_{u,c} message for the data concentrator C at any time, regardless of which utility provider is actually feeding it, to report its consumption without having to bear the selection of the detailed tariff which evolves over time and the computation of the consumption invoicing report accordingly. The utility meter messages DTup_{u,c} typically comprise at least one time and date DT and the metering counter consumption index CPT measured by the utility meter U at this time and date DT, or the metering counter differential consumption value ΔCPT measured between a first time T1, e.g. the former transmitted time and date DTₚᵣₑᵥ, and a second time T2, e.g. the current time and date DT_{curr}. In a simpler mode of implementation where the utility meter and the data concentrator communicate synchronously, i.e. on the basis of synchronized clocks where one clock is located within the utility meter and the other within the data concentrator, only the utility meter consumption index is transmitted to the data concentrator which is in charge with measuring the corresponding date and time. However, it should be noted that these two clocks do not need to have the same time basis, for instance the clock located within the data concentrator could be a common clock, whereas the clock of the utility meter could be merely a count-down or a means able to produce pulses. In a further alternative, the utility meter could transmit only its consumption index to the data concentrator, only on request from the latter. For the sake of clarity, it should be noted that the word "index" refers to a number that is counted by the utility meter. For instance, this number can relate to a consumption quantity expressed in KW/h or in m³ or in any other unit depending on the purpose for which the utility meter is used (i.e. whether it is used for metering electricity, water, gas, etc...).

In order to identify their source and their destination in an open communication network, the DTup_{u,c} message also includes the source utility meter identifier and the destination data concentrator identifier. The latter identifiers may be an integral value uniquely associated with the equipment at manufacturing time, a network address identifier, or any combination thereof.

In order to ensure the integrity of the utility meter messages, they can be further signed so that the data concentrator authenticates that the metering report comes from a genuine utility meter source. In order to ensure the confidentiality of the utility meter messages as desired (for instance to ensure end user consumption data privacy), they can also be encrypted so that the utility meter data is only accessible by the authorized data concentrator destination.

In terms of security design, most smart grid standards require the establishment of a Public Key Infrastructure (PKI) where each node in the network is associated with a pair of public and private asymmetric cryptography keys, for instance a RSA key pair, and a chain of public key certificates signed by a trusted central authority, for instance X.509 certificates. In a simple implementation corresponding to the grid topology of Figure 1, in order to report its metering data measurement DTup, the utility meter U1 generates a random payload key Kp, encrypts it with the public key KpubC2 of the data concentrator C2, and encrypts and signs the data measurement DTup by means of Kp. It transmits (Kp)KpubC2 and (DTup)Kp in one or several messages to the data concentrator C2, which decrypts the Kp value by means of its unique, secret private key KprivC2, and then the payload data DTup by means of the formerly decrypted Kp key. In a more optimized implementation, a Secure Authenticated Channel (SAC) can be negotiated by the utility meter and the data concentrator to establish a longer term shared session key Ks. This session key Ks can then be used similarly to the former payload key Kp but repeatedly, for a certain period of time, to enforce communication message integrity and confidentiality in the point-to-point transmission between the utility meter and the data concentrator. The available offerings from the utility providers are represented by tariffs tables which can be sent by the utility providers P1-P3 to each data concentrator C1-C4 connected to these providers. In order to disclose these tables in a secured manner, these tables are sent within secured utility provider messages. Such a message can be secured by several manners. A first manner is to encrypt the message according to a symmetric or a private/public scheme. A second manner to secure this message can be obtained by signing this message in view to protect its content against any modification. This can be done by the sender through a one-way function (e.g. a hash function) applied to the message to be sent in order to get a hash value which is then encrypted by means of the private key of the sender. This encrypted hash value (corresponding to a signature) can be decrypted by the recipient by using the public key of the sender. Besides, this public key can be also authenticated by a certificate from a certificate authority. Another way to secure the message is to send a signed and encrypted message. Such a message provides a double protection given that it is protected, on the one hand against any easy reading by its encryption layer, and on the other hand against any tampering of its content thanks to the signature and the certificate. Thus, the authenticity and the integrity of the message can be advantageously combined to its encryption. Applying encryption and/or signing operations can be performed with any message, e.g. with utility messages or data concentrator messages.

A tariff table, as represented in Figure 2, provides a consumption unit invoicing value, for instance 0.15 cent per kw/h, which is mapped to a date and time period interval [DT1,DT2], for instance from DT1=22:00 to DT2=22:30:00 every day. The tariff table has to comprise at least one time interval [DT1, DT2] per a period of twenty-four hours, and a rate associated to this time interval. By comparing the offerings from various providers, for instance Table 1 from provider P1 and Table 2 from provider P2, the data concentrator C2 identifies the best offering actual invoicing periods defined by a start time and date DT1 and end time and date DT2, for instance P1 from DT1 22:00 to DT2 22:30 at a rate of 0.15 as shown by Table 3 in Figure 2. Consequently, an advantageous tariff table (Table 3) can be derived and computed by the data concentrator on the basis of several tariff tables (Table 1 and Table 2). Preferably, the advantageous tariff table will be memorized within a memory of the data concentrator.

The data concentrator receives at regular intervals, for instance every 15 minutes, from each connected utility meter, a utility report message DTup_{u,c} comprising metering data measurement DTup sent from each connected utility meter, decrypts it as relevant, and verifies its signature. If the message is authenticated, the data concentrator derives the consumption values from the utility meter in the invoicing period interval [DT1, DT2] from the succession of transmitted counter values CPT, or differential values ΔCPT, defined as metering data measurement DTup. If the differential values ΔCPT has not yet been determined by the utility meter itself, the data concentrator derives the difference ΔCPT_{1,2} between the metering counter value CPT2 at a given time and date DT2 and the metering counter value CPT1 at a given time and date DT1. Thus, depending on the technical nature of the utility meter and its predefined task, the destination data concentrator has to determine the differential conception value ΔCPT on the basis of several metering data measurements. More generally, the metering data measurement DTup may comprise different data namely either:
- at least one metering counter consumption index CPT; or
- at least one metering counter consumption index CPT together with a time and date DT information resulting from a clock readable by said utility meter and corresponding to the moment where the counter consumption index has been measured; or
- directly the metering counter differential consumption value ΔCPT, e.g. if the utility meter is able to perform such a computation task.

In one embodiment, the data concentrator C then transmits the calculated difference ΔCPT_{1,2} to the utility provider P associated with the utility meter U during the tariff period [DT1, DT2]. Therefore, the data concentrator assigns the calculated differential consumption value ΔCPT to the utility management center P1-P3 offering the lowest rate for the time period interval ΔT during which this value ΔCPT has been measured. Thus, this value ΔCPT is sent, preferably together with the utility meter identifier Uid of said utility meter, from the destination data concentrator to the proper utility management center, i.e. the utility management center associated to the rate assigned to the differential consumption value ΔCPT.

In another embodiment, the data concentrator C collects and calculates for a utility meter, a sequence (i.e a plurality) of values ΔCPT_{1,2}, ΔCPT_{2,3}, ΔCPT_{3,4} for a given reporting period of time ΔRT ([RTa,RTb]), for instance one day, one week or one month, and records them into a memory of the data concentrator, e.g. under a utility meter consumption invoicing report MRup_{u,c,p}. After the end of the reporting period of time RTb, the data concentrator C in the proposed distributed computing system establishes secure communications with each utility provider P among P1, P2, P3 associated with each utility meter U and transmits the collected consumption values ΔCPT to the utility provider P, e.g. by sending the utility meter consumption invoicing report MRup_{u,c,p}. The advantage of this solution is that the utility provider only needs to process one utility meter consumption invoicing report message MRup_{u,c,p} for each reporting period of time, regardless of the actual fine gain granularity of the utility meter consumption reporting and regardless of the actual tariff updates during this period. By providing consolidated reporting messages, the number of reporting messages can be advantageously reduced and, therefore, bandwidth and computing resources can be saved.

In order to identify their source and their destination in an open communication network, the utility meter consumption invoicing report message MRup_{u,c,p} also includes the source utility meter identifier Uid. Preferably, it further includes the destination data concentrator identifier DCid and the utility provider identifier Pid. These identifiers may be an integral value uniquely associated with the equipment at manufacturing time, a network address identifier, or any combination thereof.

In order to ensure the integrity of the utility meter consumption invoicing report message MRup_{u,c,p}, it can be signed so that the utility provider authenticates that the metering report comes from a genuine data concentrator source. In order to ensure the confidentiality of the utility meter consumption as desired (for instance to ensure end user privacy), the utility meter consumption invoicing report message MRupᵤ,_{c,p} can also be encrypted so that the utility meter data is only accessible by the authorized utility provider.

In a further embodiment, the data concentrator C collects and calculates, for a plurality of utility meters which are all associated with a single utility management center (e.g. for each utility meter U1, U3 associated with utility provider P2), and records a sequence of values ΔCPT_U1_{1,2}, ΔCPT_U3_{1,2}, ΔCPT_U1_{2,3}, ΔCPT_U3_{2,3}, ΔCPT_U1_{3,4}, ΔCPT_U3_{3,4} for a given reporting period of time [RT1,RT2], for instance one day, one week or one month, for each utility meter U1, U3 associated with a utility provider P2, and records them, together with the utility meter identifier Uid to which each of these value refers, into a consolidated utility meter consumption invoicing report CR_{c,p}. After the end of the reporting period of time RT2, the data concentrator C in the proposed distributed computing system establishes secure communications with the utility provider P2 associated with the subset of utility meters U1, U3 and transmits the consolidated utility meter consumption invoicing report CR_{c,p} to the utility provider P2. The advantage of this solution is that each utility provider only needs to process one consolidated consumption invoicing report message CR_{c,p} for each data concentrator instead of each utility meter, for each period of time.

In order to identify their source and their destination in an open communication network, the consolidated consumption invoicing report message CR_{c,p} also includes a list of the source utility meters identifiers Uid, the destination data concentrator identifier DCid, and the utility provider identifier Pid. These identifiers may be an integral value uniquely associated with the equipment at manufacturing time, a network address identifier, or any combination thereof.

In order to ensure the integrity of the consolidated consumption invoicing report message CR_{c,p}, it can be signed so that the utility provider authenticates that the metering report comes from a genuine data concentrator source. In order to ensure the confidentiality of the utility meters consumption as desired (for instance to ensure end user privacy), the utility meter consumption invoicing report message CR_{c,p} can also be encrypted so that the utility meters data is only accessible by the authorized utility provider. This makes it possible for the utility providers to collect the utility metering reports for invoicing at a lower rate than they negotiate their offerings with the data concentrators, for instance only once a month, regardless of how often the rate has been updated during the month. As there are many more utility meters than data concentrators and several utility providers serving them in a typical grid topology, significant bandwidth and processing power can be saved overall. This will be illustrated by the following example, given for illustration purposes only and not limitative: if 1000 meters in a local area were to report every 15 minutes to 5 possible utility providers, each of them would need to generate, secure and transmit 24*4*5=4800 messages per day and each utility provider would need to receive and process 24*4*1000 = 96000 messages per day just for this local area. With one possible proposed solution, the utility meter only generates, secures and transmits 24*4 messages per day to the data concentrator and does not need to establish individual secure communication channels with the 5 utility providers. The data concentrator is in charge with locally computing and consolidating the 1000 utility metering reports based on the preselected offerings and corresponding tariff tables from the 5 utility providers. It can then consolidate invoicing reporting to at most 5 providers, for instance only just once a day for 1000 utility meters, i.e. the utility provider only needs to receive and process max 1000 individual messages or one consolidated message for 1000 utility meters per day.

In the case where the network between the data concentrator and the utility meter is not reliable, it may occur that a utility metering message DTup is lost. In that configuration it is preferable to transmit, as metering data measurement DTup, the counter index CPT rather than a relative differential value ΔCPT, so that the data concentrator can still interpolate the missing consumption value from the last received one and the current one and derive an acceptable consumption invoice accordingly.

Alternately, the data concentrator may also send a receipt acknowledgement and/or a retransmission query to the utility meter.

Given that providers, intermediate data concentrators C1-C4 and utility meters U1-U8 are interconnected between them within the communication network and given that the sender and the recipient(s) are identified in the exchanged messages by means of identifiers Uid, DCid, Pid, therefore messages sent to a specific recipient (e.g. a data concentrator DCid or a provider Pid) can be advantageously re-routed by an alternate recipient to the appropriate recipient. Such a roaming can be performed by an intermediate data concentrator or by a provider that would receive a message (e.g. a utility meter message DTup_{u,c} or utility meter consumption invoicing report message MRup_{u,c,p}), whereas it is not the appropriate recipient of this message. Such a roaming can be applied for instance if the message of the sender cannot reach its recipient for many reasons, such as for temporarily maintenance reasons or failure in the communication towards a certain recipient.

The data concentrator may also further send information about the actual offering and/or invoicing as relevant to the end user, periodically, for instance after reporting consolidation to the utility providers.

The data concentrator may also further send a configuration message to the utility meter to update its reporting rate.

Preferably, each time messages or reports have to be exchanged, the method of the present invention performs a step aiming to establish a secure communication respectively for each utility meter U1-U8 connected to the destination data concentrator C1-C4 and for each data concentrator C1-C4 connected to said utility management center P1-P3. This communication being secured by signing and encrypting messages and reports respectively processed by the destination data concentrator C1-C4 and by the utility management center P1-P3. Messages and reports are processed only if they are identified as being authentic by authentication means.

The present invention also refers to a system able to implement the above disclosed method. To this end, it suggests a pricing system for utility consumptions within a smart grid comprising a plurality of utility meters U1-U8, these utility meters being each associated and connected to at least one utility management center P1-P3 through an intermediate data concentrator C1-C4, each data concentrator is identified by a data concentrator identifier DCid and each utility meters U1-U8 is identified by a utility meter identifier Uid. These utility meters are adapted to produce and send secured utility meter messages DTup_{u,c} towards the data concentrator with which they are connected or associated. Each data concentrator is adapted to produce and send secured reports to the management centers P1-P3, in particular to all management centers associated with the utility meters processed by this data concentrator, each management center being identified by a management center identifier Pid, this system comprising:
- connecting means for establishing communications through communication network links Luc connecting the data concentrator to the utility meters associated with this data concentrator, and through communication network links Lcp connecting this data concentrator to the utility management center, preferably to a plurality of utility management centers,
- receiving means, located within the data concentrator C1-C4, for receiving a secured data concentrator message comprising at least a tariff table from each utility management centers P1-P3 connected to this data concentrator; this tariff table comprising at least one time interval [DT1, DT2] per a period of twenty-four hours, and a rate associated to this time interval [DT1, DT2],
- encrypting/decrypting means and/or means for signing and verifying the authenticity and the integrity of all messages exchanged between said utility management center (P1-P3), said data concentrator (C1-C4) and said utility meters (U1, U8),
- selecting means, located within the data concentrator, for performing comparisons of the rates of all time intervals [DT1, DT2] of all tariff tables, then determining the lowest rate for each time interval [DT1, DT2] in view to derive an advantageous tariff table which, for instance, can be memorized within the data concentrator,
- measuring means for determining a metering data measurement DTup by reading a counter consumption index CPT at each utility meter,
- means for generating secured utility meter messages DTup_{u,c} within each utility meter U1-U8; each of these utility meter messages comprising: the metering data measurement DTup, the utility meter identifier Uid, the data concentrator identifier DCid and the management center identifier Pid,
- utility meter sending means for transmitting these secured utility meter messages DTup_{u,c} to the proper data concentrator, i.e. to the data concentrator connected with the utility meters of these sending means,
- computing means for determining, on the basis of several metering data measurements DTup, a metering counter differential consumption value ΔCPT calculated by difference of two metering counter consumption indexes CPT measured by the utility meter within a time period interval ΔT defined by a first time T1 and a second time T2,
- assigning means for associating, to this metering counter differential consumption value ΔCPT, the utility management center P1-P3 which offers the lowest rate for the time period interval ΔT defined by times T1 and T2,
- data concentrator sending means for transmitting, from the data concentrator to the utility management center P1-P3 to which said utility meter U1-U8 is associated, a secured report containing at least, on the one hand the metering counter differential consumption value ΔCPT assigned to this management center P1-P3, and on the other hand the utility meter identifier Uid to which this value ΔCPT refers,
- a central processing unit for managing all the aforementioned means.

All of the above-mentioned means can be carried out by specific modules comprising electronic components able to achieve the functions to which each of those modules refer.

According to one embodiment, each utility meter of the system further comprises a clock readable by said measuring means for including, to the metering data measurement DTup, a time and date DT corresponding to the moment when the counter consumption index CPT was measured.

According to another embodiment, the destination data concentrator of the system comprises a memory for collecting, during a reporting period of time ΔRT, a plurality of calculated consumption values ΔCPT before sending them to the proper utility management center, for instance within the secured report transmitted by the sending means of the data concentrator at the end of the reporting period of time ΔRT.

Thus, the system of the present invention comprises means for securing the communications exchanged, on the one hand, between the utility meters and the destination data concentrator and, on the other hand, between the latter and at least one utility management center associated with these utility meters. Secured communications are carried out by common means, i.e. by signatures and encryption means applied to the utility meter messages DTup_{u,c} sent by the utility meters and to the reports sent by the destination data concentrator. Therefore, the system is provided with means for acquiring public key certificates, means to authenticate these certificates, means for producing session key (typically random session key), means for encrypting and decrypting messages with these keys and means for sending and receiving acknowledgment messages in case of completely successful transmission.

## Claims

1. Pricing method for utility consumptions within a smart grid comprising a plurality of utility meters (U1-U8) each associated and connected to a plurality of utility management centers (P1-P3) through a plurality of intermediate data concentrators (C1-C4) each identified by a data concentrator identifier DCid, each utility meter being identified by a utility meter identifier Uid and being adapted to produce and send secured utility meter messages DTup_{u,c} to one of said data concentrators, each data concentrator being adapted to produce and send secured reports to said management centers (P1-P3), each identified by a management center identifier Pid, said method comprising the steps of:
- receiving, by said data concentrator (C1-C4), a secured data concentrator message comprising at least a tariff table from each of said utility management centers (P1-P3), said tariff table comprising at least one time interval [DT1, DT2] per a period of twenty-four hours, and a rate associated to said time interval [DT1, DT2],
- decrypting and/or verifying the authenticity and the integrity of said data concentrator message; in case of failure or unsuccessful result: interrupting the processing of said data concentrator message,
- selecting, by said data concentrator (C1-C4), the lowest rate for each time interval [DT1, DT2] among the rates of all time intervals of all tariff tables, in order to derive an advantageous tariff table,
- receiving, by said data concentrator (C1-C4), said utility meter messages DTup_{u,c} from said utility meter (U1-U8), each of these utility meter messages DTup_{u,c} comprising: a metering data measurement DTup reported by the utility meter which sent this message DTup_{u,c}, its utility meter identifier Uid, said data concentrator identifier DCid and said management center identifier Pid,
- decrypting and/or verifying the authenticity and the integrity of said utility meter messages, in case of failure or unsuccessful result: interrupting the processing of said utility meter message,
- determining, on the basis of several metering data measurements DTup, a metering counter differential consumption value ΔCPT calculated by difference of two metering counter consumption indexes CPT measured by said utility meter within a time period interval ΔT defined by a first time T1 and by a second time T2,
- assigning to said metering counter differential consumption value ΔCPT the utility management center (P1-P3) suggesting the lowest rate for the time period interval ΔT comprised between said first time T1 and said second time T2,
- establishing, for each management center (P1-P3), a report containing at least the metering counter differential consumption value ΔCPT assigned to this management center (P1-P3) together with the utility meter identifier Uid to which this value ΔCPT refers,
- encrypting and
- securing said report before sending it from said data concentrator (C1-C4) to this utility management center (P1-P3) which will process said report only after having decrypted it and/or checked its authenticity and its integrity.

2. Method of claim 1, wherein each of said utility messages and/or said data concentrator message and/or said report is secured by encrypting and/or by signing said message or report.

3. Method of any of preceding claims, wherein it further comprises a step of sending an acknowledgment from said data concentrator (C1-C4) towards said utility meter (U1-U8), in response to the reception of said utility meter message DTup_{u,c} sent by the latter.

4. Method of claim 1, wherein a plurality of calculated consumption values ΔCPT are collected during a reporting period of time ΔRT and stored in a memory of the data concentrator (C1-C4) before to be sent, at the end of said reporting period of time ΔRT, from said data concentrator to the utility management center (P1-P3) to which said utility meter is associated, within said report.

5. Method of any of preceding claims, wherein said data concentrator (C1-C4) further receives, together with said tariff table, an information about the amount of available utility deliverable from each of said utility management centers (P1-P3).

6. Method of any of preceding claims, wherein sending of said utility meter message DTup_{u,c} is performed by the utility meter on request of the data concentrator after having received a transmission query from the latter.

7. Method of any of preceding claims, wherein the data concentrator sends a configuration message to said utility meter in order to update a reporting rate of the utility meter messages DTup_{u,c}.

8. Pricing system for utility consumptions within a smart grid comprising a plurality of utility meters (U1-U8) each associated and connected to a plurality of utility management centers (P1-P3) through a plurality of intermediate data concentrators (C1-C4) each identified by a data concentrator identifier DCid, each utility meters (U1-U8) being identified by a utility meter identifier Uid and being adapted to produce and send secured utility meter messages DTup_{u,c} to one of said data concentrators, each data concentrator being adapted to produce and send secured reports to said management centers (P1-P3), each identified by a management center identifier Pid, said system comprising:
- connecting means for establishing communications through communication network links Luc, Lcp, connecting the data concentrators (C1- C4) to said utility meters, respectively to said utility management centers,
- receiving means for receiving, by said data concentrator (C1-C4), a secured data concentrator message comprising at least a tariff table from each of said utility management centers (P1-P3), said tariff table comprising at least one time interval [DT1, DT2] per a period of twenty-four hours, and a rate associated to said time interval [DT1, DT2],
- encrypting/decrypting means and/or means for signing and verifying the authenticity and the integrity of all messages exchanged between said utility management centers (P1-P3), said data concentrators (C1-C4) and said utility meters (U1, U8),
- selecting means for comparing, by said data concentrator (C1-C4), the rates of all time intervals [DT1, DT2] of all tariff tables and determining the lowest rate for each time interval [DT1, DT2] in order to derive and memorize an advantageous tariff table,
- measuring means for determining a metering data measurement DTup by reading a counter consumption index CPT at each utility meter,
- means for generating secured utility meter messages DTup_{u,c} within each utility meter (U1-U8), each of said utility meter messages comprising: said metering data measurement DTup, said utility meter identifier Uid, said data concentrator identifier DCid and said management center identifier Pid,
- utility meter sending means for transmitting said secured utility meter messages DTup_{u,c} to said data concentrator,
- computing means for determining, on the basis of several metering data measurements DTup, a metering counter differential consumption value ΔCPT calculated by difference of two metering counter consumption indexes CPT measured by said utility meter within a time period interval ΔT defined by a first time T1 and a second time T2,
- assigning means for assigning to said metering counter differential consumption value ΔCPT the utility management center (P1-P3) suggesting the lowest rate for the time period interval ΔT comprised between said first time T1 and said second time T2,
- data concentrator sending means for transmitting, from the data concentrator towards at least one of the utility management centers (P1-P3) to which said utility meter (U1-U8) is associated, a secured report containing at least the metering counter differential consumption value ΔCPT assigned to this management center (P1-P3) together with the utility meter identifier Uid to which this value ΔCPT refers,
- a central processing unit for managing all of said means.

9. System of claim 8, wherein said data concentrator comprises a memory for collecting, during a reporting period of time ΔRT, a plurality of calculated consumption values ΔCPT before to be sent within said secured report, by said data concentrator sending means at the end of said reporting period of time ΔRT.

## Patentansprüche

1. Preissystem für Dienstprogrammverbräuche in einem intelligenten Stromnetz mit einer Vielzahl von Verbrauchszählern (U1-U8), jeder verbunden mit und zugeordnet einer Vielzahl von Dienstprogramm-Verwaltungszentren (P1-P3) mittels einer Vielzahl von Zwischendatenkonzentratoren (C1-C4), jede identifiziert durch eine Datenkonzentratorkennung DCid, wobei jeder Verbrauchszähler durch eine Verbrauchszählerkennung Uid identifiziert wird und geeignet ist, gesicherte Verbrauchszählermeldungen DTup_{u,c} herzustellen und zu einem der Datenkonzentratoren zu senden, wobei jeder Datenkonzentrator geeignet ist, gesicherte Berichte herzustellen und an die Verwaltungszentren (P1-P3) zu senden, jedes identifiziert durch eine Verwaltungszentrumskennung Pid, mit folgenden Phasen:
- Empfang, durch den Datenkonzentrator (C1-C4), einer gesicherten Datenkonzentratornachricht mit mindestens einer Tarifliste von jedem der Dienstprogramm-Verwaltungszentren (P1-P3), wobei die Tarifliste mindestens eine Zeitspanne [DT1, DT2] pro einer Zeit von vierundzwanzig Stunden umfasst und eine Gebühr, die der Zeitspanne [DT1, DT2] zugeordnet ist,
- Entschlüsselung und/oder Prüfung der Echtheit und der Integrität der Datenkonzentratornachricht; bei Misserfolg: Unterbrechen der Verarbeitung der Datenkonzentratornachricht,
- Auswahl, durch den Datenkonzentrator (C1-C4), der niedrigsten Gebühr für jede Zeitspanne [DT1, DT2] aus den Gebühren für alle Zeitspannen von allen Tariflisten, um eine vorteilhafte Tarifliste zu finden,
- Empfang, durch den Datenkonzentrator (C1-C4), der Verbrauchszählermeldungen DTup_{u,c} von besagtem Verbrauchszähler (U1-U8), wobei jede dieser Verbrauchszählermeldungen DTup_{u,c} folgendes umfasst: eine Messdatenmessung DTup, vom Verbrauchszähler angegeben, der diese Nachricht DTup_{u,c} sandte, seine Verbrauchszählerkennung Uid, die Datenkonzentratorkennung DCid und die Verwaltungszentrumskennung Pid,
- Entschlüsselung und/oder Prüfung der Echtheit und der Integrität der Verbrauchszählermeldungen, bei Misserfolg: Unterbrechen der Verarbeitung der Verbrauchszählernachricht,
- Ermittlung, auf Grundlage von mehreren Messdatenmessungen DTup, eines Messzähler-Differentialverbrauchswerts ΔCPT, berechnet aus der Differenz von zwei Messzählerverbrauchsindexen CPT, die von besagtem Verbrauchszähler innerhalb eines Zeitraums ΔT gemessen wurden, definiert durch eine erste Zeit T1 und eine zweite Zeit T2,
- Zuteilung, zu besagtem Messzähler-Differentialverbrauchswert ΔCPT, des Dienstprogramm-Verwaltungszentrums (P1-P3), das die niedrigste Gebühr für den Zeitraum ΔT zwischen besagter erster Zeit T1 und der zweiten Zeit T2 vorschlägt,
- Erstellung, für jedes Verwaltungszentrum (P1-P3), eines Berichts, der mindestens den Messzähler-Differentialverbrauchswert ΔCPT enthält, der diesem Verwaltungszentrum (P1-P3) zugeteilt wurde, zusammen mit der Verbrauchszählerkennung Uid, auf die dieser Wert ΔCPT sich bezieht,
- Verschlüsselung und
- Sicherung des Berichts, bevor er von dem Datenkonzentrator (C1-C4) an dieses Dienstprogramm-Verwaltungszentrum (P1-P3) gesendet wird, das den Bericht nur verarbeiten wird, nachdem es ihn entschlüsselt und/oder seine Echtheit und Integrität geprüft hat.

2. Verfahren nach Anspruch 1, wobei jede der Dienstprogrammmeldungen und/oder die Datenkonzentratornachricht und/oder der Bericht durch Verschlüsselung gesichert wird und/oder durch Unterschreiben der Nachricht oder des Berichts.

3. Verfahren nach einem beliebigen der vorhergehenden Patentansprüche, mit des Weiteren einer Phase des Sendens einer Bestätigung von dem Datenkonzentrator (C1-C4) an den Verbrauchszähler (U1-U8), als Reaktion auf den Empfang der Verbrauchszählernachricht DTupᵤ,_{c}, die von letzterem gesandt wurde.

4. Verfahren nach Anspruch 1, wobei eine Vielzahl von berechneten Verbrauchswerten ΔCPT während einer Berichtszeitspanne ΔRT gesammelt und in einem Speicher des Datenkonzentrators (C1-C4) gespeichert werden, bevor sie am Ende der Berichtszeitspanne ΔRT von dem Datenkonzentrator an das Dienstprogramm-Verwaltungszentrum (P1-P3) gesendet werden, dem der Verbrauchszähler zugeordnet ist, in dem Bericht.

5. Verfahren nach einem beliebigen der vorhergehenden Patentansprüche, wobei der Datenkonzentrator (C1-C4) des Weiteren, zusammen mit der Tarifliste, Informationen über die Menge an verfügbaren Dienstprogrammen empfängt, die von jedem der Dienstprogramm-Verwaltungszentren (P1-P3) lieferbar sind.

6. Verfahren nach einem beliebigen der vorhergehenden Patentansprüche, wobei das Senden der Verbrauchszählernachricht DTup_{u,c} von dem Verbrauchszähler auf Anfrage des Datenkonzentrators durchgeführt wird, nachdem er einen Sendeauftrag von letzterem empfangen hat.

7. Verfahren nach einem beliebigen der vorhergehenden Patentansprüche, wobei der Datenkonzentrator eine Konfigurationsnachricht sendet.

8. Preissystem für Dienstprogrammverbräuche in einem intelligenten Stromnetz mit einer Vielzahl von Verbrauchszählern (U1-U8), jeder mit einer Vielzahl von Dienstprogramm-Verwaltungszentren (P1-P3) mittels einer Vielzahl von Zwischendatenkonzentratoren (C1-C4) verbunden und ihnen zugeordnet, jeder identifiziert durch eine Datenkonzentratorkennung DCid, wobei jeder Verbrauchszähler (U1-U8) durch eine Verbrauchszählerkennung Uid identifiziert wird und geeignet ist, gesicherte Verbrauchszählermeldungen DTup_{u,c} herzustellen und zu einem der Datenkonzentratoren zu senden, wobei jeder Datenkonzentrator geeignet ist, gesicherte Berichte an die Verwaltungszentren (P1-P3) herzustellen und zu senden, jede identifiziert durch eine Verwaltungszentrumkennung Pid, wobei besagtes System folgendes umfasst:
- Verbindungsmittel zum Aufbau von Kommunikation über Kommunikationsnetz-Verbindungen Luc, Lcp, die die Datenkonzentratoren (C1- C4) mit den Verbrauchszählern bzw. den Dienstprogramm-Verwaltungszentren verbinden,
- Empfangsmittel zum Empfang, durch den Datenkonzentrator (C1-C4), einer gesicherten Datenkonzentratornachricht mit mindestens einer Tarifliste von jedem der Dienstprogramm-Verwaltungszentren (P1-P3), wobei die Tarifliste mindestens eine Zeitspanne [DT1, DT2] pro einer Zeit von vierundzwanzig Stunden umfasst, und einer Gebühr, die besagter Zeitspanne [DT1, DT2] zugeordnet ist,
- Verschlüsselungs-/Entschlüsselungsmittel und/oder Mittel zum Unterschreiben und Prüfen der Echtheit und Integrität aller Meldungen, die zwischen den Dienstprogramm-Verwaltungszentren (P1-P3), den Datenkonzentratoren (C1-C4) und den Verbrauchszählern (U1 U8) ausgetauscht werden,
- Auswahlmittel, damit der Datenkonzentrator (C1-C4) die Gebühren aller Zeitspannen [DT1, DT2] von allen Tariflisten vergleichen und die niedrigsten Gebühr für jede Zeitspanne [DT1, DT2] bestimmen kann, um eine vorteilhafte Tarifliste abzuleiten und zu speichern,
- Messvorrichtungen zur Ermittlung einer Messdatenmessung DTup durch Ablesen eines Zählerverbrauchsindexes CPT bei jedem Verbrauchszähler,
- Mittel zur Erzeugung gesicherter Verbrauchszählermeldungen DTup_{u,c} innerhalb jedes Verbrauchszählers (U1-U8), wobei jede der Verbrauchszählermeldungen folgendes umfasst: die Messdatenmessung DTup, die Verbrauchszählerkennung Uid, die Datenkonzentratorkennung DCid und die Verwaltungszentrumskennung Pid,
- Verbrauchszählersendemittel, um die gesicherten Verbrauchszählermeldungen DTup_{u,c} an den Datenkonzentrator zu übertragen,
- Berechnungsmittel zur Ermittlung, auf Grundlage von mehreren Messdatenmessungen DTup, eines Messzähler-Differentialverbrauchswerts ΔCPT, berechnet aus der Differenz von zwei Messzählerverbrauchsindexen CPT, die vom Verbrauchszähler innerhalb eines Zeitraums ΔT gemessen wurden, definiert durch eine erste Zeit T1 und eine zweite Zeit T2,
- Zuteilungsmittel zum Zuteilen an den Messzähler-Differentialverbrauchswert ΔCPT desjenigen Dienstprogramm-Verwaltungszentrums (P1-P3), das die niedrigste Gebühr für den Zeitraum ΔT zwischen besagter erster Zeit T1 und der zweiten Zeit T2 vorschlägt,
- Datenkonzentratorsendungsmittel zum Übertragen, vom Datenkonzentrator an mindestens eines der Dienstprogramm-Verwaltungszentren (P1-P3), dem der Verbrauchszähler (U1-U8) zugeteilt ist, eines gesicherten Berichts, der mindestens den Messzähler-Differentialverbrauchswert ΔCPT enthält, der diesem Verwaltungszentrum (P1-P3) zugeteilt ist, zusammen mit der Verbrauchszählerkennung Uid, auf die dieser Wert ΔCPT sich bezieht,
- eine zentrale Verarbeitungseinheit zum Verwalten all dieser Mittel.

9. System nach Anspruch 8, wobei der Datenkonzentrator einen Speicher umfasst, um während einer Berichtszeitspanne ΔRT eine Vielzahl von berechneten Verbrauchswerten ΔCPT vor dem Senden in dem gesichertem Bericht durch die Datenkonzentrator-Sendemittel am Ende der Berichtszeitspanne ΔRT zu sammeln.

## Revendications

1. Procédé de tarification pour des consommations d'énergie dans un réseau intelligent comprenant une pluralité de compteurs d'énergie (U1-U8) chacun associé et connecté à une pluralité de centres de gestion d'énergie (P1-P3) à travers une pluralité de concentrateurs de données intermédiaires (C1-C4) chacun identifié par un identificateur de concentrateur de données DCid, chaque compteur d'énergie étant identifié par un identificateur de compteur d'énergie Uid et étant adapté pour produire et envoyer des messages de compteur d'énergie sécurisés DTup_{u,c} à l'un desdits concentrateurs de données, chaque concentrateur de données étant adapté pour produire et envoyer des rapports sécurisés auxdits centres de gestion (P1-P3), chacun identifié par un identificateur de centre de gestion Pid, ledit procédé comprenant les phases de:
- recevoir, par ledit concentrateur de données (C1-C4), un message de concentrateur de données sécurisé comprenant au moins une table tarifaire de chacun desdits centres de gestion d'énergie (P1-P3), ladite table tarifaire comprenant au moins un intervalle de temps [DT1, DT2] par une période de vingt-quatre heures, et un tarif associé audit intervalle de temps [DT1, DT2],
- déchiffrer et/ou vérifier l'authenticité et l'intégrité dudit message de concentrateur de données; en cas d'échec ou de résultat négatif : interrompre le traitement dudit message de concentrateur de données,
- sélectionner, par ledit concentrateur de données (C1-C4), le tarif le plus bas pour chaque intervalle de temps [DT1, DT2] parmi les tarifs de tous les intervalles de temps de toutes les tables tarifaires, afin de dériver une table tarifaire avantageuse,
- recevoir, par ledit concentrateur de données (C1-C4), lesdits messages de compteur d'énergie DTup_{u,c} dudit compteur d'énergie (U1-U8), chacun de ces messages de compteur d'énergie DTup_{u,c} comprenant: un mesurage de données de mesure DTup rapporté par le compteur d'énergie qui a envoyé ce message DTup_{u,c}, son identificateur de compteur d'énergie Uid, ledit identificateur de concentrateur de données DCid et ledit identificateur de centre de gestion Pid,
- déchiffrer et/ou vérifier l'authenticité et l'intégrité desdits messages de compteur d'énergie, en cas d'échec ou de résultat négatif : interrompre le traitement dudit message de compteur d'énergie,
- déterminer, sur la base de plusieurs mesurages de données de mesure DTup, une valeur de consommation différentielle de compteur de mesure ΔCPT calculée par la différence de deux indices de consommation de compteur de mesure CPT mesurés par ledit compteur d'énergie dans un intervalle de période de temps ΔT défini par un premier temps T1 et par un deuxième temps T2,
- attribuer à ladite valeur de consommation différentielle de compteur de mesure ΔCPT le centre de gestion d'énergie (P1-P3) suggérant le tarif le plus bas pour l'intervalle de période de temps ΔT compris entre ledit premier temps T1 et ledit deuxième temps T2,
- établir, pour chaque centre de gestion (P1-P3), un rapport contenant au moins la valeur de consommation différentielle de compteur de mesure ΔCPT attribuée à ce centre de gestion (P1-P3) avec l'identificateur de compteur d'énergie Uid auquel cette valeur ΔCPT se réfère,
- chiffrer et
- sécuriser ledit rapport avant de l'envoyer dudit concentrateur de données (C1-C4) à ce centre de gestion d'énergie (P1-P3) qui traitera ledit rapport seulement après avoir déchiffré et/ou vérifié son authenticité et son intégrité.

2. Procédé selon la revendication 1, où chacun desdits messages d'énergie et/ou ledit message de concentrateur de données et/ou ledit rapport est sécurisé par le chiffrement et/ou la signature dudit message ou rapport.

3. Procédé selon l'une quelconque des revendications précédentes, où il comprend en outre une étape consistant à envoyer un accusé de réception à partir dudit concentrateur de données (C1-C4) audit compteur d'énergie (U1-U8), en réponse à la réception dudit message de compteur d'énergie DTup_{u,c} envoyé par ce dernier.

4. Procédé selon la revendication 1, où une pluralité de valeurs de consommation calculées ΔCPT sont collectées pendant une période de temps de rapport ΔRT et stockées dans une mémoire du concentrateur de données (C1-C4) avant d'être envoyées, à la fin de ladite période de temps de rapport ΔRT, à partir dudit concentrateur de données au centre de gestion d'énergie (P1-P3) auquel ledit compteur d'énergie est associé, dans ledit rapport.

5. Procédé selon l'une quelconque des revendications précédentes, où ledit concentrateur de données (C1-C4) reçoit en outre, avec ladite table tarifaire, une information sur la quantité d'énergie disponible livrable à partir de chacun desdits centres de gestion d'énergie (P1-P3).

6. Procédé selon l'une quelconque des revendications précédentes, où l'envoi dudit message de compteur d'énergie DTupᵤ,_{c} est effectué par le compteur d'énergie à la demande du concentrateur de données après avoir reçu une requête de transmission de ce dernier.

7. Procédé selon l'une quelconque des revendications précédentes, où le concentrateur de données envoie un message de configuration audit compteur d'énergie afin de mettre à jour une vitesse de rapport des messages de compteur d'énergie DTup_{u,c}.

8. Système de tarification pour les consommations d'énergie dans un réseau intelligent comprenant une pluralité de compteurs d'énergie (U1-U8) chacun associé et connecté à une pluralité de centres de gestion d'énergie (P1-P3) à travers une pluralité de concentrateurs de données intermédiaires (C1-C4) chacun identifié par un identificateur de concentrateur de données DCid, chaque compteur d'énergie (U1-U8) étant identifié par un identificateur de compteur d'énergie Uid et étant adapté pour produire et envoyer des messages de compteur d'énergie sécurisés DTup_{u,c} à l'un desdits concentrateurs de données, chaque concentrateur de données étant adapté pour produire et envoyer des rapports sécurisés auxdits centres de gestion (P1-P3), chacun identifié par un identificateur de centre de gestion Pid, ledit système comprenant:
- des moyens de connexion pour établir des communications à travers des liens de réseau de communication Luc, Lcp, connectant les concentrateurs de données (C1- C4) auxdits compteurs d'énergie, respectivement auxdits centres de gestion d'énergie,
- des moyens de réception pour recevoir, par ledit concentrateur de données (C1-C4), un message de concentrateur de données sécurisé comprenant au moins une table tarifaire de chacun desdits centres de gestion d'énergie (P1-P3), ladite table tarifaire comprenant au moins un intervalle de temps [DT1, DT2] par une période de vingt-quatre heures, et un tarif associé audit intervalle de temps [DT1, DT2],
- des moyens de chiffrement / déchiffrement et/ou des moyens pour signer et vérifier l'authenticité et l'intégrité des tous les messages échangés entre lesdits centres de gestion d'énergie (P1-P3), lesdites concentrateurs de données (C1-C4) et lesdits compteurs d'énergie (U1 U8),
- des moyens de sélection pour comparer, par ledit concentrateur de données (C1-C4), les tarifs de tous les intervalles de temps [DT1, DT2] de toutes les tables tarifaires et déterminer le tarif le plus bas pour chaque intervalle de temps [DT1, DT2] afin de dériver et mémoriser une table tarifaire avantageuse,
- des moyens de mesure pour déterminer un mesurage de données de mesure DTup lisant un indice de consommation de compteur CPT à chaque compteur d'énergie,
- des moyens pour générer des messages de compteur d'énergie sécurisés DTup_{u,c} dans chaque compteur d'énergie (U1-U8), chacun desdits messages de compteur d'énergie comprenant: ledit mesurage de données de mesure DTup, ledit identificateur de compteur d'énergie Uid, ledit identificateur de concentrateur de données DCid et ledit identificateur de centre de gestion Pid,
- des moyens d'envoi de compteur d'énergie pour transmettre lesdits messages de compteur d'énergie sécurisés DTup_{u,c} audit concentrateur de données,
- des moyens de calcul pour déterminer, à partir de plusieurs mesurages de données de mesure DTup, une valeur de consommation différentielle de compteur de mesure ΔCPT calculée par la différence de deux indices de consommation de compteur de mesure CPT mesurés par ledit compteur d'énergie dans un intervalle de période de temps ΔT défini par un premier temps T1 et un deuxième temps T2,
- des moyens d'attribution pour attribuer audit valeur de consommation différentielle de compteur de mesure ΔCPT le centre de gestion d'énergie (P1-P3) suggérant le tarif le plus bas pour l'intervalle de période de temps ΔT compris entre ledit premier temps T1 et ledit deuxième temps T2,
- des moyens d'envoi de concentrateur de données pour transmettre, à partir du concentrateur de données vers au moins un des centres de gestion d'énergie (P1-P3) auquel ledit compteur d'énergie (U1-U8) est associé, un rapport sécurisé contenant au moins la valeur de consommation différentielle de compteur de mesurage ΔCPT attribuée à ce centre de gestion (P1-P3) avec l'identificateur de compteur d'énergie Uid auquel cette valeur ΔCPT se réfère,
- une unité centrale de traitement pour gérer tous lesdits moyens.

9. Système selon la revendication 8, où ledit concentrateur de données comprend une mémoire pour collecter, pendant une période de temps de rapport ΔRT, une pluralité de valeurs de consommation calculées ΔCPT avant d'être envoyées dans ledit rapport sécurisé, par lesdits moyens d'envoi de concentrateur de données à la fin de ladite période de temps de rapport ΔRT.
